Europäisches Patentamt

European Patent Office

Office européen des brevets

(11) Numéro de publication: **0 .176 441**
**A1**

## (12) DEMANDE DE BREVET EUROPEEN

(21) Numéro de dépôt: 85401833.0

(22) Date de dépôt: 20.09.85

(51) Int. Cl.⁴: **A 45 D 20/06**
A 45 D 1/02, B 23 K 3/02
F 24 H 7/04, F 24 H 3/04

(30) Priorité: 24.09.84 FR 8414604
30.01.85 FR 851304

(43) Date de publication de la demande:
02.04.86 Bulletin 86/14

(84) Etats contractants désignés:
AT BE CH DE FR GB IT LI LU NL SE

(71) Demandeur: IXIA CONCEPTIQUE INDUSTRIELLE
2208 Route de Grasse
F-06600 Antibes(FR)

(72) Inventeur: Zanelli, Robert
48, Les Hameaux de St-Claude
F-06600 Antibes(FR)

(74) Mandataire: Nony, Michel
Cabinet Nony 29, rue Cambacérès
F-75008 Paris(FR)

(54) Instrument chauffant à accumulation de chaleur.

(57) L'invention est relative à un instrument chauffant.

Il comprend une enveloppe tubulaire externe (4) entourant une enveloppe tubulaire interne (5) en délimitant avec cette dernière un espace annulaire, deux pièce annulaires d'extrémité (6,7) pour fermer de façon étanche ledit espace annulaire, un matériau fusible à une température supérieure à la température ambiante à l'intérieur dudit espace annulaire, des moyens de chauffage (23, 24, 25) étant prévus pour provoquer la fusion dudit matériau fusible préalablement à l'utilisation de l'instrument.

. Fig:1

Instrument chauffant à accumulation de chaleur

La présente invention concerne un instrument chauffant à accumulation de chaleur, tel qu'un fer à souder ou un sèche-cheveux par exemple.

On sait que les fers à souder classiques comportent une résistance chauffante bobinée autour du tube qui reçoit la panne. Un matériau isolant tel que du mica doit être interposé entre le tube et la résistance chauffante et nuit au passage de la chaleur de cette résistance vers la panne.

Par ailleurs ces fers comportent un cordon d'alimentation électrique qui oppose une résistance gênante pour l'utilisateur et risque en outre d'être brûlé par la panne.

On a déjà proposé pour remédier aux inconvénients du cordon d'alimentation, de stocker l'énergie électrique dans des batteries, par exemple cadmium/nickel.

Mais ces batteries sont coûteuses, nécessitent une alimentation électrique, un transformateur moyenne tension/basse tension et un pont redresseur pour leur chargement, et ont un temps de recharge de plusieurs heures.

La présente invention vise à fournir un instrument chauffant, tel qu'un fer à souder ou un sèche-cheveux n'utilisant ni cordon d'alimentation ni batterie.

A cet effet, l'invention a pour objet un instrument chauffant, caractérisé par le fait qu'il comprend une enveloppe tubulaire externe entourant une enveloppe tubulaire interne en délimitant avec cette dernière un espace annulaire, deux pièces annulaires d'extrémité pour fermer de façon étanche ledit espace annulaire, et un matériau fusible à une température supérieure à la température ambiante à l'intérieur dudit espace annulaire, des moyens de chauffage étant prévus pour provoquer la fusion dudit matériau fusible préalablement à l'utilisation de l'instrument.

L'énergie est par conséquent emmagasinée directement sous forme thermique, par l'intermédiaire de la chaleur latente de fusion du matériau fusible.

Par ailleurs, les moyens de chauffage peuvent ne pas être des moyens électriques et sont de toutes manières indépendants de l'instrument qui est donc autonome.

Enfin, l'espace central intérieur à l'enveloppe interne peut être utilisé pour la fixation d'une panne de fer à souder, d'un outil à couper les matières plastiques, d'un outil de pyrogravure ou autre, ou encore laissé libre pour le passage d'air, dans le cas d'un sèche-cheveux par exemple.

Dans un mode de réalisation particulier, les extrémités axiales des enveloppes interne et externe sont engagées dans des rainures d'étanchéité annulaires formées dans les pièces d'extrémité.

Dans le cas où l'on souhaite réaliser la fusion du matériau fusible par effet joule, lesdites pièces d'extrémité sont réalisées dans un matériau isolant électriquement ou sont isolées électriquement d'au moins une des enveloppes tubulaires, lesdites enveloppes tubulaires sont réalisées dans un matériau électriquement conducteur, ledit matériau fusible est un matériau conducteur, et des moyens de connexion électrique sont prévus pour connecter lesdites enveloppes à une source de courant électrique.

Le courant électrique est par conséquent transmis d'un moyen de connexion à l'autre par l'intermédiaire d'une des enveloppes tubulaires, du matériau fusible et de l'autre enveloppe tubulaire.

Dans un mode de réalisation particulier de l'invention, une bague tubulaire est disposée entre les deux enveloppes tubulaires pour former une résistance électrique de valeur prédéterminée entre la partie du matériau fusible située entre l'enveloppe externe et la bague, et la partie du matériau fusible située entre l'enveloppe interne et la bague.

Cette bague permet d'ajuster la résistance électrique de l'ensemble constitué par les deux enveloppes tubulaires et le matériau fusible de manière à éviter d'utiliser un transformateur pour la phase de chauffage de l'instrument.

L'invention a également pour objet un support de recharge pour un instrument chauffant tel que décrit ci-dessus, caractérisé par le fait qu'il comprend des moyens d'alimentation électrique susceptibles de venir en contact électrique avec lesdits moyens de connexion électrique, et un interrupteur pour fermer le circuit d'alimentation électrique en coopérant avec un ergot solidaire dudit instrument chauffant.

Par conséquent, dès que l'instrument est posé sur son support, le circuit d'alimentation électrique est fermé par l'interrupteur et le matériau fusible est chauffé par effet joule. L'interrupteur permet d'éviter que le circuit soit fermé par inadvertance sur un corps conducteur quelconque autre que l'instrument.

Dans un autre mode de réalisation de l'invention, l'une des pièces annulaires d'extrémité est agencée pour former un siège pour une cartouche de fluide combustible sous pression.

Dans ce cas, la cartouche est mise en contact avec cette pièce d'extrémité de manière à provoquer l'échappement du fluide combustible qui est mis à feu dans l'espace intérieur à l'enveloppe interne et provoque ainsi la fusion du matériau fusible.

TG/JD/AO/CDE 70015

- 3 -

0176441

Dans un autre mode de réalisation, l'espace intérieur à l'enveloppe interne est agencé pour recevoir une cartouche chimique exothermique.

La chaleur dégagée par la cartouche chimique est alors directement transmise au matériau fusible par l'intermédiaire de l'enveloppe interne.

Bien entendu les trois modes de réalisation de chauffage par effet joule, par cartouche de fluide combustible, ou par cartouche chimique, peuvent avantageusement être combinés sur le même appareil pour permettre d'assurer sa mise en service dans toutes les situations.

Dans le cas où l'appareil chauffant selon l'invention est destiné à être utilisé comme fer à souder, on choisira de préférence un matériau fusible à une température de fusion comprise entre 295°C et 450°C.

Dans un mode de réalisation particulier, l'instrument selon l'invention comprend au moins un conduit traversant ledit matériau fusible et débouchant dans au moins une des pièces d'extrémité pour recevoir une cartouche chauffante électrique et/ou une cartouche chimique exothermique.

Dans ce cas, le chauffage peut être réalisé indifféremment par des moyens électriques, par une cartouche de fluide combustible sous pression ou par une cartouche chimique exothermique, sans qu'il soit nécessaire d'extraire l'outil.

Cet instrument peut en outre comprendre au moins un deuxième conduit traversant ledit matériau fusible et débouchant dans au moins une des pièces d'extrémité pour recevoir une cartouche de fluide combustible sous pression et/ou une cartouche chimique exothermique.

On décrira maintenant à titre d'exemples non limitatifs des modes de réalisation particuliers de l'invention en référence aux dessins schématiques annexés dans lesquels :

- la figure 1 est une vue partielle en coupe axiale d'un instrument chauffant selon l'invention, et

- les figures 2, 3 et 4 représentent trois modes de chauffage possibles pour l'appareil de la figure 1,

- la figure 5 est une vue similaire à la figure 1 d'un autre mode de réalisation, et

- les figures 6 et 7 représentent deux modes de chauffage pour un autre instrument selon l'invention.

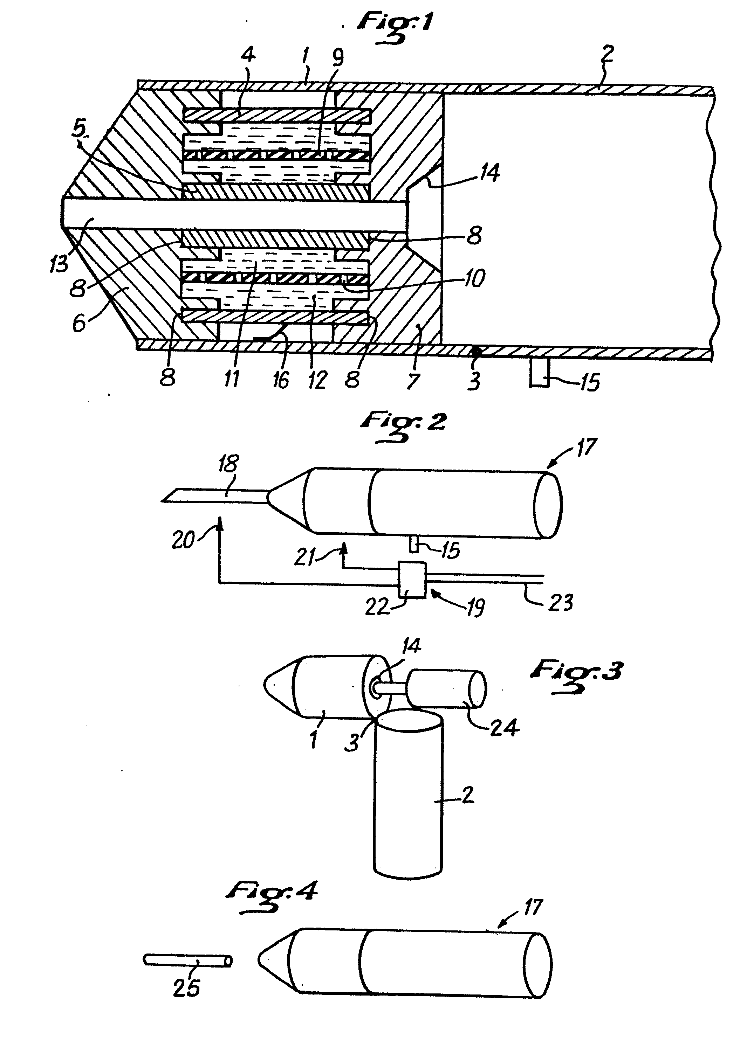

L'appareil de la figure 1 comporte un carter extérieur en deux parties dont une partie 1 entoure les organes chauffants de l'appareil alors que l'autre partie 2 sert de poignée. Les parties 1 et 2 sont articulées autour d'un axe 3 pour des raisons qui seront exposées ci-après.

Une enveloppe tubulaire externe 4 et une enveloppe tubulaire interne 5 sont montées dans deux pièces annulaires d'extrémité, à savoir une

TG/JD/AO/CDE 70015

pièce extérieure 6 et une pièce intérieure 7. Les pièces 6 et 7 comportent des rainures annulaires 8 permettant d'assurer l'étanchéité des liaisons entre les enveloppes 4 et 5 d'une part et les pièces 6 et 7 d'autre part.

Une bague annulaire 9, réalisée par exemple dans un matériau conducteur, dans une céramique poreuse, ou dans une matière synthétique isolante électriquement, munie de trous 10, sépare en deux cavités 11 et 12 l'espace annulaire compris entre les enveloppes 4 et 5.

Dans les cavités 11 et 12 est disposé un matériau solide à la température ambiante.

Les pièces d'extrémité 6 et 7 et l'enveloppe interne 5 délimitent un conduit cylindrique 13 débouchant du côté de la pièce 7 de manière à former un siège 14 dont la fonction sera décrite ci-après.

Enfin, un ergot 15 est monté sur le carter extérieur et un contact électrique 16, constitué par exemple par un bilame, connecte électriquement la partie 1 du carter à l'enveloppe externe 4.

L'appareil 17, selon l'invention, est représenté à la figure 2 muni d'une pièce de contact électrique 18 engagée dans le conduit 13, qui peut par exemple être constituée par une panne de fer à souder.

Sur cette figure 2, l'appareil 17 est sur le point d'être posé sur un support désigné généralement par 19 et comportant deux points de contact électrique 20 et 21 destinés à supporter respectivement la panne 18 et le carter de l'appareil. En outre, un interrupteur bipolaire 22 relié à une source de courant électrique par un cordon d'alimentation 23 est prévu pour coopérer avec l'ergot 15 lorsque l'instrument 17 est posé sur le support 19. Lorsque l'ergot s'engage dans l'interrupteur 22, celui-ci ferme le circuit électrique qui est ainsi constitué par le support 20, la panne 18, l'enveloppe interne 5, le matériau fusible situé dans la cavité 11, la bague 9, le matériau fusible situé dans la cavité 12, l'enveloppe externe 4, la lame 16, la partie 1 de carter, et le support 21.

Il se produit alors un courant électrique qui dégage par effet joule de la chaleur dans le matériau fusible de manière à faire fondre celui-ci. Le matériau de la bague 9 ainsi que la dimension des ouvertures qui y sont éventuellement réalisées, sont choisis de manière à obtenir la chute de potentiel souhaitée dans le circuit précité, de sorte que le support 19 peut être directement raccordé à la moyenne tension sans interposition de transformateur.

Le bilame 16 est agencé de telle sorte que, lorsque la température atteint un certain seuil, il coupe ce circuit électrique, ce qui assure la sécurité de fonctionnement de l'appareil.

TG/JD/AO/CDE 70015

0176441

En variante, le bilame peut être situé sur le support 19, par exemple au niveau des contacts 20 ou 21.

La figure 3 montre que, lorsque la partie de carter 2 est pivotée par rapport à la partie de carter 1, elle donne accès au siège 14 sur lequel peut être appliqué l'orifice d'une cartouche 24 de fluide combustible sous pression. Ce fluide étant libéré, il s'écoule dans le conduit 13 où il est mis à feu pour provoquer l'échauffement et la fusion du matériau fusible contenu dans les cavités 11 et 12.

Dans la figure 4, une cartouche chimique exothermique 25, est sur le point d'être introduite dans le conduit 13 pour y être amorcée. Après cet amorçage, la cartouche 25 dégagera de la chaleur qui provoquera également la fusion du matériau fusible contenu dans les cavités 11 et 12.

La cartouche 25 peut d'ailleurs comporter un prolongement formant la panne du fer à souder, afin d'éviter la nécessité de remplacer cette cartouche par une panne indépendante lors de l'utilisation.

L'appareil 17 selon l'invention peut par conséquent être utilisé même si l'on ne dispose pas à proximité de source d'énergie électrique à laquelle connecter le support 19.

Le matériau fusible utilisé dans les cavités 11 et 12 est choisi de manière à avoir une température de fusion dans la gamme de température souhaitée pour chauffer l'outil inséré dans le conduit 13 ou l'air traversant ce conduit. A titre d'exemple, dans le cas de l'application de cet appareil à un fer à souder, on pourra choisir un matériau ayant une température de fusion comprise entre 295°C et 450°C, tel que du zinc ou halogénure d'argent.

On choisira de préférence un matériau ne se sublimant pas, ne présentant pas de risques d'explosion ni de toxicité, ne réagissant pas avec l'enveloppe, et ne se décomposant pas à la température de fonctionnement.

Enfin, on choisira également de préférence un matériau fusible ayant une forte chaleur latente de fusion afin d'augmenter l'autonomie de l'appareil.

L'outil, tel que la panne de fer à souder, peut ainsi être maintenu dans le conduit formé à l'intérieur de l'enveloppe interne, le conduit traversant le matériau fusible étant alors utilisé uniquement pour le logement des moyens de chauffage. Ce conduit débouche dans une des pièces d'extrémité pour permettre l'introduction de la cartouche.

Il en résulte une simplification des opérations de l'utilisateur et en outre une plus grande flexibilité de l'instrument.

Dans un autre mode de réalisation, un prolongement d'un desdits conduits fait saillie d'une des pièces d'extrémité pour former un outil chauffant.

TG/JD/AO/CDE 70015

On assure ainsi une excellente transmission de la chaleur entre le conduit contenant la cartouche chauffante et l'outil, par exemple la panne du fer à souder.

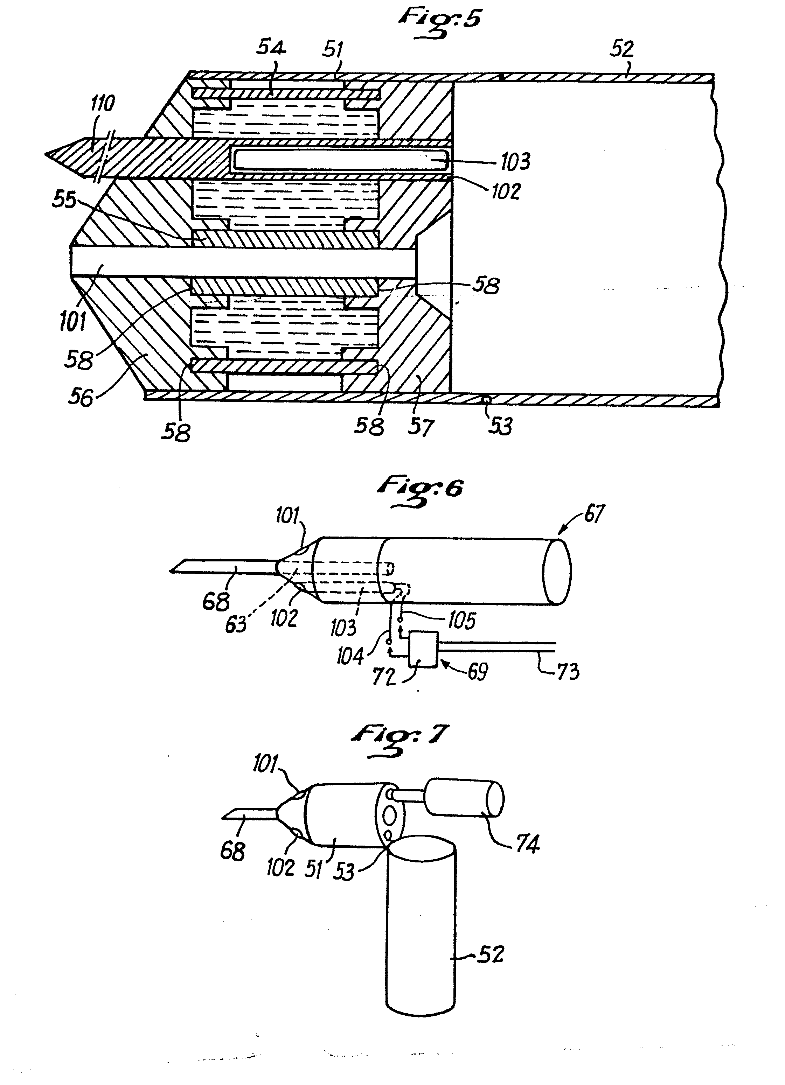

Comme l'appareil décrit ci-dessus, l'appareil représenté à la figure 5 comporte un carter extérieur en deux parties dont une partie 51 entoure les organes chauffants alors que l'autre partie 52 sert de poignée. Les parties 51 et 52 sont articulées autour d'un axe 53 pour permettre l'accès aux conduits décrits ci-après.

Une enveloppe tubulaire externe 54 et une enveloppe tubulaire interne 55 sont montées dans deux pièces annulaires d'extrémité, à savoir une pièce extérieure 56 et une pièce intérieure 57.

Les pièces 56 et 57 comportent des rainures annulaires 58 permettant d'assurer l'étanchéité des liaisons entre les enveloppes 54 et 55 d'une part et les pièces 56 et 57 d'autre part. Un matériau solide à la température ambiante, tel que décrit ci-dessus, est disposé dans l'espace annulaire compris entre les enveloppes tubulaires externe 54 et interne 55.

Deux conduits 101 et 102 traversent le matériau fusible ainsi que les deux pièces d'extrémité 56 et 57, le conduit 101 étant en fait dans le cas présent, partiellement confondu avec l'intérieur de l'enveloppe tubulaire interne 55.

Dans le mode de réalisation de la figure 5, le conduit 102 se prolonge en 110 pour former une panne de fer à souder d'une seule pièce avec la paroi du conduit.

Une cartouche électrique 103 ou une cartouche chimique peut être disposée à l'intérieur du conduit 102 pour assurer le chauffage direct de la panne 110 en plus du chauffage du matériau fusible, ce qui diminue l'inertie thermique de l'instrument.

Le conduit 101 permet de recevoir une cartouche de fluide combustible ou une cartouche chimique exothermique comme cela sera décrit ci-après en référence à la variante de la figure 7.

Dans cette variante, représentée aux figures 6 et 7, les pièces d'extrémité 56 et 57 et l'enveloppe interne 55 délimitent, comme ci-dessus, un conduit cylindrique 63 permettant le maintien de l'outil chauffant 68.

Le conduit 102 permet l'introduction d'une cartouche chauffante électrique 103 (figure 6) dont les connexions 104 et 105 sont susceptibles de coopérer avec l'interrupteur bipolaire 72 du support 69 recevant le cordon d'alimentation électrique 73.

Ainsi, lorsque l'appareil 67 est posé sur son support 69, la cartouche chauffante électrique 103 est alimentée et provoque par conséquent l'élévation de température et la fusion du matériau fusible.

**0176441**

La figure 7 représente une cartouche 74 de fluide combustible sous pression dont la sortie est appliquée à l'entrée du conduit 101 pour provoquer la fusion du matériau fusible grâce à l'élévation de température produite par la combustion du gaz.

Le conduit 101 peut également recevoir une cartouche chimique exothermique dans le même but.

On constate que, grâce au perfectionnement selon la présente invention, l'outil 68, par exemple la panne de fer à souder, peut être laissé en place, quelque soit le moyen de chauffage utilisé.

Diverses variantes et modifications peuvent bien entendu être apportées à la description qui précède sans sortir pour autant ni du cadre, ni de l'esprit de l'invention.

TG/JD/AO/CDE 70015

## REVENDICATIONS

1 - Instrument chauffant, caractérisé par le fait qu'il comprend une enveloppe tubulaire externe (4) entourant une enveloppe tubulaire interne (5) en délimitant avec cette dernière un espace annulaire, deux pièces annulaires d'extrémité (6,7) pour fermer de façon étanche ledit espace annulaire, un matériau fusible à une température supérieure à la température ambiante à l'intérieur dudit espace annulaire, des moyens de chauffage (23,24,25) étant prévus pour provoquer la fusion dudit matériau fusible préalablement à l'utilisation de l'instrument.

2 - Instrument chauffant selon la revendication 1, caractérisé par le fait que lesdites pièces d'extrémité sont réalisées dans un matériau isolant électriquement ou sont isolées électriquement d'au moins une des enveloppes tubulaires, que lesdites enveloppes sont réalisées dans un matériau électriquement conducteur, que ledit matériau fusible est un matériau conducteur, et que des moyens de connexion électrique (1, 16, 18) sont prévus pour connecter lesdites enveloppes à une source de courant électrique.

3 - Instrument chauffant selon la revendication 2, caractérisé par le fait qu'il comprend une bague tubulaire (9) disposée entre les deux enveloppes tubulaires pour former une résistance électrique de valeur prédéterminée entre la partie du matériau fusible située entre l'enveloppe externe et la bague et la partie du matériau fusible située entre l'enveloppe interne et la bague.

4 - Support de recharge pour un instrument chauffant selon l'une quelconque des revendications 2 et 3, caractérisé par le fait qu'il comprend des moyens d'alimentation électrique (20, 21) susceptibles de venir en contact électrique avec lesdits moyens de connexion électrique, et un interrupteur (22) pour fermer le circuit d'alimentation électrique en coopérant avec un ergot (15) solidaire dudit instrument chauffant.

5 - Instrument chauffant selon l'une quelconque des revendications à 3, caractérisé par le fait que l'une des pièces annulaires d'extrémité (7) est agencée pour former un siège (14) pour une cartouche (24) de fluide combustible sous pression.

6 - Instrument chauffant selon l'une quelconque des revendications à 3 et 5, caractérisé par le fait que l'espace intérieur à l'enveloppe interne est agencé pour recevoir une cartouche chimique exothermique (25).

7 - Instrument chauffant selon l'une quelconque des revendications à 3, 5 et 6, caractérisé par le fait que le matériau fusible a une température de fusion comprise entre 295°C et 450°C.

8 - Instrument chauffant selon l'une quelconque des revendications à 3 et 5 à 7, caractérisé par le fait que les extrémités axiales des enveloppes interne et externe sont engagées dans des rainures d'étanchéité annulaires (8) formées dans les pièces d'extrémités.

9 - Instrument chauffant selon l'une quelconque des revendications 1 à 8, caractérisé par le fait qu'il comprend au moins un conduit (102) traversant ledit matériau fusible et débouchant dans au moins une des pièces d'extrémité pour recevoir une cartouche chauffante électrique (103) et/ou une cartouche chimique exothermique.

10 - Instrument chauffant selon la revendication 9, caractérisé par le fait qu'il comprend au moins un deuxième conduit (101) traversant ledit matériau fusible et débouchant dans au moins une des pièces d'extrémité pour recevoir une cartouche de fluide combustible sous pression (74) et/ou une cartouche chimique exothermique.

11 - Instrument chauffant selon l'une quelconque des revendications 9 et 10, caractérisé par le fait qu'un prolongement d'un desdits conduits fait saillie d'une des pièces d'extrémité pour former un outil chauffant.

TG/JD/AO/CDE 70015

*Fig:1*

*Fig:2*

*Fig:3*

*Fig:4*

*Fig:5*

*Fig:6*

*Fig:7*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 4) |
|---|---|---|---|
| X | US-A-3 559 658  (GENEST)<br>* Colonne 1, ligne 55 - colonne 3, ligne 4; figures 1-5 * | 1,3,9 | A 45 D  20/06<br>A 45 D   1/02<br>B 23 K   3/02<br>F 24 H   7/04<br>F 24 H   3/04 |
| | --- | | |
| A | FR-A-2 381 240  (L'OREAL)<br>* Page 5, lignes 16-29; figure 3 * | 2,8 | |
| | --- | | |
| A | US-A-3 892 943  (VAN DROOGENBROEK)<br>* Colonne 2, lignes 40-51; figures 5-7 * | 4 | |
| | --- | | |
| A | FR-A-2 102 625  (NIELS)<br>* Figures 1-3 * | 5 | |
| | --- | | **DOMAINES TECHNIQUES RECHERCHES (Int. Cl.4)** |
| A | FR-A-2 150 970  (POWER APPLICATIONS)<br>* Revendication 12; figure 6 * | 6 | |
| | --- | | A 45 D<br>B 23 K<br>F 24 H |
| A | FR-A-  589 943  (SPEZIALBRONZEN-UND METALLWALZWERK)<br>* Page 1, lignes 35-54; figure 1 * | 7 | |
| | --- | | |
| A | US-A-3 581 055  (TOMIO MAKINO)<br>* Colonne 1, ligne 41 - colonne 2, ligne 24; figures 1-3 * | 9 | |
| | --- | | |
| A | US-A-2 584 999  (FLOURNOY) | | |
| | ---            -/- | | |

Le présent rapport de recherche a été établi pour toutes les revendications

| Lieu de la recherche<br>LA HAYE | Date d achèvement de la recherche<br>16-12-1985 | Examinateur<br>SIGWALT C. |
|---|---|---|

Office européen des brevets

RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | US-A-1 671 177 (BOYDEN) | | |

DOMAINES TECHNIQUES RECHERCHES (Int. Cl.4)

Le présent rapport de recherche a été établi pour toutes les revendications

| Lieu de la recherche LA HAYE | Date d'achèvement de la recherche 16-12-1985 | Examinateur SIGWALT C. |
|---|---|---|